# EUROPÄISCHE PATENTSCHRIFT

(11) **EP 3 039 311 B1**
(45) Veröffentlichungstag und Bekanntmachung des Hinweises auf die Patenterteilung: **23.08.2017**
(21) Anmeldenummer: 14752298.1
(22) Anmeldetag: 12.08.2014
(51) Int. Cl.: F16D 65/22, F16D 65/28

(54) **BREMSEINHEIT**
BRAKE UNIT
UNITÉ DE FREINAGE

(30) Priorität: 27.08.2013 DE 102013217065
(43) Veröffentlichungstag der Anmeldung: 06.07.2016
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2014/067250
(87) Internationale Veröffentlichungsnummer: WO 2015/028304

(56) Entgegenhaltungen:
- GB-A- 1 418 630
- US-B1- 6 415 896

## Beschreibung

Die vorliegende Erfindung betrifft eine Bremseinheit, insbesondere zum Einsatz in Nutzfahrzeugen.

Gegenstand der Erfindung sind insbesondere als Spreizkeiltrommelbremsen ausgeführte Bremseinheiten. Grundlegende konstruktive Merkmale derartiger Bremseinheiten sind aus dem Stand der Technik bereits bekannt. Üblicherweise werden die Bremsbacken einer Trommelbremse durch eine Spreizkeilanordnung mit einer Kraft beaufschlagt, gegen die Innenseite einer Bremstrommel gepresst und führen so den Bremsvorgang aus. Der Spreizkeil seinerseits wurde bisher durch einen speziell für Spreizkeiltrommelbremsen ausgelegten Bremszylinder angetrieben, wobei es nicht ohne Weiteres möglich war, auch Bremszylinder, welche in Bremssystemen mit Scheibenbremsen eingesetzt werden, an Trommelbremseinheiten einzusetzen. Insbesondere da Scheibenbremsen und auch die dazugehörigen Bremszylinder im Bereich der Nutzfahrzeugtechnik eine wesentlich größere Verbreitung gefunden haben, werden Bremszylinder für Scheibenbremsen im Allgemeinen in größeren Stückzahlen hergestellt als die speziellen Bremszylinder für Spreizkeiltrommelbremsen und sind daher günstiger zu beschaffen. Darüber hinaus gestaltet sich die Festlegung eines Spreizkeiltrommelbremszylinders an der entsprechenden Radaufhängung des Nutzfahrzeuges wesentlich schwieriger als die einfache Anbringung eines Scheibenbremszylinders, für welchen standardisierte Schnittstellenmaße verwendet werden können.

Die GB 1418 630 und die US-6, 451, 896 offenbaren Spreizkeilbremsen für Nutzfahrzeuge, bei welchen ein Spreizkeil in einer Trägereinheit entlang einer Führungsachse verlagerbar angeordnet ist, um zwei Trommelbremsbeläge an eine Bremstrommel heranzuführen.
Aufgabe der vorliegenden Erfindung ist es, ein Spreizkeiltrommelbremssystem dahingehend zu verbessern, dass die Festlegung eines beliebigen Bremszylinders auf einfache Weise möglich ist und gleichzeitig der Verschleiß verringert und eine einfachere Montage ermöglicht wird.

Diese Aufgabe wird gelöst mit einer Bremseinheit gemäß Anspruch 1. Weitere Vorteile und Merkmale der Erfindung ergeben sich aus den abhängigen Ansprüchen.

Erfindungsgemäß weist die Bremseinheit eine Trägereinheit und ein Übertragungselement auf, wobei die Trägereinheit einen Führungsabschnitt aufweist, in welchem das Übertragungselement entlang einer Führungsachse verlagerbar angeordnet ist, wobei das Übertragungselement einen ersten Aufnahmeabschnitt, der mit einer Kolbenstange eines Bremszylinders in Eingriff bringbar ist und einen zweiten Aufnahmeabschnitt, der mit einem Stößel einer Spreizkeileinheit in Eingriff bringbar ist, aufweist, wobei das Übertragungselement ausgelegt ist, Kräfte und Verlagerungen entlang der Führungsachse zwischen der Kolbenstange und dem Stößel zu übertragen. Die Trägereinheit umfasst vorzugsweise den Bremsträger eines herkömmlichen Trommelbremssystems und weist einen Führungsabschnitt auf. Der Führungsabschnitt wiederum ist vorzugsweise eine Bohrung oder ein Kanal in der Trägereinheit, welcher insbesondere durch die Beschaffenheit seiner inneren Oberfläche ausgelegt ist, das Übertragungselement entlang einer Führungsachse zu führen und ein leichtes Gleiten bzw. eine einfache Verlagerung des Übertragungselements entlang der Führungsachse zu ermöglichen. Hierzu weist der Führungsabschnitt vorzugsweise eine besonders glatte Oberfläche auf oder ist mit einer Beschichtung versehen, welche ein leichtes Gleiten und einen geringen Verschleiß durch Reibung ermöglicht. Das Übertragungselement weist vorzugsweise eine Außengeometrie auf, die der Innengeometrie des Führungsabschnitts entspricht, bzw. vorzugsweise identisch zu der Innengeometrie des Führungsabschnitts ist. Weiterhin weist das Übertragungselement vorzugsweise an seinem ersten Ende längs der Führungsachse einen ersten Aufnahmeabschnitt auf, welcher derart ausgelegt ist, dass er mit der Kolbenstange eines Bremszylinders in Eingriff bringbar ist. Weiterhin weist das Übertragungselement an seinem dem ersten Ende gegenüberliegenden Ende einen zweiten Aufnahmeabschnitt auf, welcher mit dem Stößel einer Spreizkeileinheit in Eingriff gebracht werden kann. Im Betrieb der Bremseinheit wird bevorzugt die Kolbenstange des Bremszylinders durch eine angelegte Druckkraft, beispielsweise durch Hydraulik oder Pneumatik aufgebracht, in Richtung des Übertragungselements verlagert, greift am ersten Aufnahmeabschnitt des Übertragungselements an und überträgt eine Kraft an das Übertragungselement, welche dieses entlang der Führungsachse in Richtung des Stößels bzw. in Richtung der Spreizkeileinheit verlagert. Bei dieser Verlagerungsbewegung greift das Übertragungselement wiederum mit seinem zweiten Aufnahmeabschnitt an dem Stößel der Spreizkeileinheit ein und verlagert diesen ebenfalls entlang der Führungsachse in Richtung der Spreizkeileinheit. Bei dieser Verlagerung wird - wie es aus dem Stand der Technik bekannt ist - in der Spreizkeileinheit eine keilförmige Geometrie derart verlagert, dass durch die Spreizkeileinheit die Bremsbacken der Trommelbremse gegen die Innenseiten der Bremstrommel gepresst werden. Das Übertragungselement ist vorzugsweise ein von der Kolbenstange des Bremszylinders separat ausgebildetes Bauteil, da auf diese Weise bei Verschleiß des Übertragungselements oder der Kolbenstange nur eines der Bauteile ausgewechselt werden kann. Vorzugsweise überträgt die Kolbenstange nur in einer Richtung eine Kraft an das Übertragungselement und ist in der entgegen gesetzten Richtung nicht am Übertragungselement gesichert. Auf diese Weise kann der Bremszylinder mit seiner Kolbenstange leicht von der Spreizkeileinheit abgenommen werden, ohne vorher ein form- oder kraftschlüssige Verbindung zwischen Kolbenstange und Übertragungselement auflösen oder überwinden zu müssen.

Vorzugsweise sind der erste Aufnahmeabschnitt und der zweite Aufnahmeabschnitt an zwei gegenüberliegenden Seiten des Übertragungselements angeordnet und im Wesentlichen koaxial zueinander ausgerichtet. Als koaxiale Ausrichtung der beiden Aufnahmeabschnitte wird im diesem Zusammenhang bevorzugt eine Ausrichtung der Aufnahmeschnitte derart definiert, dass die jeweils quer zur Führungsachse liegenden Querschnitte der Aufnahmeabschnitte bzw. des Übertragungselements im jeweiligen Aufnahmeabschnitt einen auf einer zur Führungsachse parallelen Achse liegenden Flächenmittelpunkt aufweisen. Die Flächenmittelpunkte beider Aufnahmeabschnitte liegen vorzugsweise auf der Führungsachse. Bei koaxial ausgerichteten Flächenmittelpunkten der Querschnitte der Aufnahmeabschnitte kann vorzugsweise verhindert werden, dass bei einer Kraftübertragung an das Übertragungselement Kraftkomponenten auftreten, die quer zur Führungsachse wirken und somit ein Verkanten oder ein Schrägstellen des Übertragungselements verursachen können.

Vorzugsweise liegen der Punkt der Krafteinleitung durch die Kolbenstange an das Übertragungselement und der Punkt der Krafteinleitung durch den Stößel an das Übertragungselement auf der Führungsachse. Insbesondere bevorzugt ist das Übertragungselement derart ausgebildet, dass die Flächenmittelpunkte in sämtlichen Querschnitten quer zur Führungsachse bzw. insbesondere bevorzugt senkrecht zur Führungsachse jeweils genau auf der Führungsachse liegen. Das heißt, dass beispielsweise bei einem rechteckigen Querschnitt der Schnittpunkt der Diagonalen des Rechtecks vorzugsweise auf der Führungsachse liegt. Bei einem kreisförmigen bzw. zylindrischen Querschnitt liegen jeweils die Mittelpunkte der kreisförmigen Querschnitte auf der Führungsachse. Darüber hinaus ist es vorgesehen, dass die Krafteinleitung von Kolbenstange und Stößel an das Übertragungselement jeweils bevorzugt ebenfalls im Bereich der Führungsachse stattfindet, insbesondere, um ein Quer- bzw. Schrägstellen und ein daraus folgendes Verkanten des Übertragungselements im Führungsabschnitt zu verhindern.

Besonders bevorzugt weist das Übertragungselement im ersten Aufnahmeabschnitt und/oder im zweiten Aufnahmeabschnitt und/oder zwischen den Aufnahmeabschnitten ein steifes Material auf. Das steife Material dient vorzugsweise dazu, die hohen Bremskräfte, welche vom Bremszylinder aufgebracht werden, möglichst unmittelbar und unverfälscht an die Spreizkeileinheit zu übertragen und somit die vom Anwender der Bremse gewünschten Bremswirkungen möglichst unverfälscht und ohne Zeitverzögerung erzielen zu können. Dabei muss das steife Material jedoch auch eine gewisse Zähigkeit aufweisen und darf nicht zu Sprödbruch neigen, um die hohen Kräfte und auch ggf. Stöße vom Bremssystem bzw. vom Bremszylinder verkraften zu können. Bevorzugtes Material für den Abschnitt steifen Materials des Übertragungselements ist ein Stahl oder ein ähnliche hartes bzw. festes Material aus dem Bereich der Faserverbundwerkstoffe. Bevorzugt weist das steife Material eine Zylinderform auf und erstreckt sich über den gesamten Bereich zwischen dem ersten Aufnahmeabschnitt und dem zweiten Aufnahmeabschnitt. Alternativ bevorzugt könnten auch nur einzelne Bereiche zwischen dem ersten und dem zweiten Aufnahmeabschnitt mit einem steifen Material verstärkt sein, wobei darüber hinaus auch ein schwingungsdämpfendes bzw. geringfügig elastisches Material vorgesehen sein kann, insbesondere, um hochfrequente Schwingungen des gesamten Bremssystems dämpfen bzw. abfedern zu können.

Weiterhin bevorzugt weist das Übertragungselement im ersten Aufnahmeabschnitt und/oder im zweiten Aufnahmeabschnitt ein verschleißminderndes Material auf. Bei der Kraftübertragung zwischen der Kolbenstange und dem Übertragungselement und zwischen dem Stößel und dem Übertragungselement treten in den Aufnahmeabschnitten hohe Belastungen bzw. hohe lokale Belastungen des Materials des Übertragungselements auf. Beispielsweise können im Bereich des direkten Kontakts zwischen der Kolbenstange und dem Übertragungselement bzw. zwischen dem Stößel und dem Übertragungselement lokale Spannungsspitzen aufgrund von Hertzscher Flächenpressung auftreten, welche das Material des Übertragungselements bzw. des Aufnahmeabschnitts lokal stark beeinträchtigen und beispielsweise Pitting oder ähnliche Schädigungen des Materials hervorrufen können. Aus diesem Grund ist es bevorzugt, die Aufnahmeabschnitte mit einem besonders widerstandsfähigen bzw. besonders harten Material auszustatten, welches die Lebensdauer des gesamten Übertragungselements verlängert und eine sichere Funktion der Bremseinheit gewährleistet. Als besonders verschleißminderndes Material kommt in diesem Fall eine Metalleinlage oder eine Metallbeschichtung sowie faserverstärktes Keramikmaterial oder eine Teflonbeschichtung in Frage.

Weiterhin bevorzugt weist das Übertragungselement einen Gleitabschnitt auf, der ausgelegt ist, mit zweckmäßigerweise geringem Spiel am Führungsabschnitt zu gleiten, wobei der Gleitabschnitt vorzugsweise ein verschleißminderndes Material aufweist. Der Gleitabschnitt des Übertragungselements ist vorzugsweise die Fläche oder vorzugsweise eine Vielzahl von Flächen, welche am Führungsabschnitt mit ausreichendem Spiel anliegen und das Übertragungselement gegenüber dem Führungsabschnitt abstützen und eine Führung des Übertragungselements längs der Führungsachse erlauben. Dabei kann der Gleitabschnitt vorzugsweise aus einem besonders leicht gleitenden Polymer ausgebildet oder mit diesem beschichtet sein, wobei das Polymer vorzugsweise mit einem geringen Reibbeiwert an der Oberfläche des Führungsabschnitts gleitet. Weiterhin bevorzugt kann ein Gleitlack zum Einsatz kommen.

In einer besonders bevorzugten Ausführungsform weist der Gleitabschnitt zwei Zylinderabschnitte auf, an deren Mantelflächen das Übertragungselement im Führungsabschnitt geführt ist, wobei die Zylinderabschnitte längs der Führungsachse voneinander beabstandet und durch einen Zwischenraum getrennt sind. Insbesondere um Gewicht einzusparen, kann vorgesehen sein, das Übertragungselement nicht als Vollkörper auszuführen, sondern zwei oder vorzugsweise eine Vielzahl einzelner Zylinderabschnitte an dem Übertragungselement anzuordnen. Die Zylinderabschnitte sind dabei vorzugsweise scheibenförmig ausgebildet und es befinden sich Zwischenräume zwischen den Zylinderabschnitten, wodurch insbesondere bevorzugt Gewicht eingespart werden kann und auch die Materialkosten des Übertragungselements verringert werden können. Weiterhin bevorzugt weisen die Zylinderabschnitte eine steg- oder speichenartige Struktur auf. Es kann auf diese Weise erreicht werden, dass die Festigkeit der Zylinderabschnitte ausreichend hoch ist und trotzdem eine erhebliche Gewichtsersparnis vorliegt. Besonders bevorzugt sind die Zylinderabschnitte auf gleicher Höhe entlang der Führungsachse wie die Aufnahmeabschnitte angeordnet.

In einer bevorzugten Ausführungsform weist der Gleitabschnitt einen Vor- oder Rücksprung auf, der mit einem korrespondierenden Rück- oder Vorsprung des Führungsabschnitts in Eingriff bringbar ist, um das Übertragungselement gegen Verdrehung um die Führungsachse relativ zur Trägereinheit zu sichern. Ein entsprechender Rücksprung ist vorzugsweise als parallel zur Führungsachse verlaufende Nut ausgebildet, welche entweder am Führungsabschnitt oder am Gleitabschnitt vorgesehen ist und mit einem, an dem jeweils anderen Element angeordneten Vorsprung derart in Eingriff bringbar ist, dass ein Verdrehen des Übertragungselements um die Führungsachse relativ zur Trägereinheit verhindert ist. Alternativ zu einem solchen Vor- oder Rücksprung am Gleitabschnitt oder am Führungsabschnitt, könnte auch ein rechteckiger bzw. nicht kreisförmiger Querschnitt des Gleitabschnitts und des Führungsabschnitts vorgesehen sein, welcher ebenfalls eine Verdrehbewegung des Übertragungselements verhindert.

In einer besonders bevorzugten Ausführungsform weist der Führungsabschnitt eine verschleißmindernde Beschichtung auf. Besonders bevorzugt ist das Material der Beschichtung dabei ein optimaler Reibpartner, d. h. ein Reibpartner mit einem besonders geringen Reibungsbeiwerk, zum Material des Gleitabschnitts. Bevorzugt kann ein Gleitlack oder eine silikonhaltige Beschichtung oder eine Polyamid basierte Beschichtung am Führungsabschnitt vorgesehen sein. Weiterhin bevorzugt kann ein Oberflächenhärteverfahren zum Einsatz kommen, welches die Verschleißneigung des Führungsabschnitts weiter verringert, so dass das Gleiten des Übertragungselements im Führungsabschnitt bei möglichst geringer Reibung und möglichst geringem Verschleiß stattfindet.

Vorzugsweise weist das Übertragungselement eine maximale Länge längs der Führungsachse und eine maximale Breite quer zur Führungsachse auf, wobei das Verhältnis der Breite zur Länge im Bereich von 0,5 - 2, vorzugsweise 0,8 - 1,6 und besonders bevorzugt bei ca. 1,2 - 1,4 liegt. Je geringer das Verhältnis der Breite zur Länge ist, desto höher ist die Fähigkeit des Übertragungselements trotz einer eventuell auftretenden Querbelastung, d. h. Belastung mit Kraftkomponenten quer zur Führungsachse, ein Verkanten oder ein Schrägstellen zu verhindern und Kräfte zwischen dem Stößel und der Kolbenstange weiterhin möglichst reibungsarm entlang der Führungsachse zu übertragen. Andererseits wird, wenn das Verhältnis zu klein gewählt wird, der Platzbedarf des Übertragungselements längs der Führungsachse zu hoch und es ergibt sich daher eine Untergrenze des Verhältnisses von Breite zu Länge bei 0,5. Bei dem maximalen Wert des Verhältnisses von 2, haben Tests gezeigt, dass trotz der sehr kompakten Bauweise des Übertragungselements, dieses in der Lage ist, auch bei etwas größerem Spiel zwischen dem Gleitabschnitt und dem Führungsabschnitt und einer möglichen Querbelastung, ein Verkanten oder ein Querstellen in ausreichender Weise zu verhindern. Insbesondere der Wert des Verhältnisses von 1,2 - 1,4, kann einen günstigen Kompromiss zwischen einer kompakten Bauweise des Übertragungselements und einer ausreichenden Sicherheit gegen Verkanten des Übertragungselements im Führungsabschnitt gewährleisten.

Ferner bevorzugt weist der erste Aufnahmeabschnitt und/oder der zweite Aufnahmeabschnitt einen Rücksprung bzw. eine trichterförmige Aussparung auf, der/die sich in Richtung der Führungsachse erstreckt und in welche(m) die jeweils korrespondierende Kolbenstange bzw. der Stößel einführbar ist. Die trichterförmige Aussparung der Aufnahmeabschnitte ist insbesondere bevorzugt dafür ausgelegt, dass eventuelle Schrägstellungen des Stößels und der Kolbenstange nicht unmittelbar über ein Drehmoment an das Übertragungselement übertragen werden. Weiterhin bevorzugt ist es, dass die Aufnahmeabschnitte relativ nah beieinander angeordnet sind, d. h., dass relativ wenig Material zwischen den Aufnahmeabschnitten vorgesehen ist, während der Gleitabschnitt eine größere Erstreckung längs der Führungsachse aufweist, um insbesondere bei Schrägbelastung eine ausreichend hohe Hebelkraft aufbringen zu können, welche das Übertragungselement gegen Verkanten im Führungsabschnitt sichert.

Insbesondere bevorzugt ist es, dass der Rücksprung bzw. die trichterförmige Aussparung des ersten und/oder des zweiten Aufnahmeabschnitts einen Öffnungswinkel aufweist, wobei der Öffnungswinkel Werte von 5° - 45°, bevorzugt von 15° - 30° und insbesondere bevorzugt von ca. 23° - 25° aufweist. Für den bevorzugten Fall, dass die trichterförmigen Aussparungen des ersten und/oder des zweiten Aufnahmeabschnitts einen nur sehr geringen Öffnungswinkel α aufweisen, ist die verbleibende Wand zwischen der Aussparung und der äußeren Fläche des Gleitabschnitts des Übertragungselements möglichst dick und somit auch vergleichsweise stabil und kann große Hebelkräfte bzw. Querkräfte aufnehmen und ein Schrägstellen des Übertragungselements verhindern. Je größer der Öffnungswinkel der Aussparung gewählt ist, desto größer ist auch der Spielraum, in welchem sich der Stößel oder die Kolbenstange relativ zum Übertragungselement schrägstellen können, ohne eine Hebelkraft auf das Übertragungselement zu übertragen. Als besonders vorteilhafter Bereich, welcher einen gelungenen Kompromiss zwischen einer ausreichenden Festigkeit der verbleibenden Wand und einer ausreichend hohen Beweglichkeit des Stößels und der Kolbenstange relativ zum Übertragungselement gewährleistet, hat sich der Bereich von 15° - 30° und insbesondere der Bereich von 23° - 25° erwiesen.

Weiterhin bevorzugt weist der erste und/oder der zweite Aufnahmeabschnitt eine Aufnahmefläche auf, wobei die erste Aufnahmefläche einen ersten mittleren Krümmungsradius aufweist und wobei die zweite Aufnahmefläche einen zweiten mittleren Krümmungsradius aufweist und wobei der erste Krümmungsradius vorzugsweise größer ist als der zweite Krümmungsradius. Als Aufnahmefläche wird in diesem Zusammenhang der Teil der Oberfläche des ersten bzw. des zweiten Aufnahmeabschnitts definiert, der in Kontakt mit dem Stößel bzw. der Kolbenstange tritt. Besonders bevorzugt ist die erste bzw. die zweiter Aufnahmefläche dabei konkav gekrümmt, so dass ein vorzugsweise konvex gekrümmter Kontaktbereich an der Kolbenstange und dem Stößel möglichst passgenau in die jeweilige Aufnahmefläche eingreifen kann und eine Kraft möglichst flächig und unter Vermeidung von lokalen Spannungsspitzen auf das Übertragungselement übertragen werden kann. Insbesondere bevorzugt ist es dabei, dass der Krümmungsradius der ersten Aufnahmefläche ein größerer ist als der zweite Krümmungsradius der zweiten Aufnahmefläche, da in fast allen gängigen Konfigurationen bekannter Bremseinheiten die Kolbenstange dicker und damit auch mit größerem Krümmungsradius ihrer Kontaktfläche ausgelegt sein wird als der Stößel der Spreizkeileinheit.

Vorzugsweise steht der erste Krümmungsradius zum zweiten Krümmungsradius in einem Verhältnis von 1 - 3, vorzugsweise 1,2 - 2 und insbesondere bevorzugt von ca. 1,5 - 1,6. Mit einem möglichst großem Verhältnisbereich von 1 - 3 hat es sich gezeigt, dass fast alle gängigen Bremssysteme mit einer Bremseinheit gemäß der vorliegenden Erfindung ausgestattet werden können, wobei trotzdem noch eine ausreichende Führungsgenauigkeit der Kolbenstange und des Stößels an dem Übertragungselement bzw. an den Aufnahmeflächen des Übertragungselements gewährleistet ist. Wählt man ein Verhältnis des ersten Radius zum zweiten Radius im Bereich von 1,2 - 2, so kann eine höhere Führungsgenauigkeit erreicht werden, d. h. der Krümmungsradius passt besser zu gängigen Krümmungsradien der auf dem Markt befindlichen Kolbenstangen und Stößel, bietet aber dennoch Reserven für eine eventuelle Maßabweichung. Der besonders bevorzugte Bereich des Verhältnisses der Krümmungsradien zueinander von 1,5 - 1,6, ist für eine besonders weit verbreitete Auslegung der Kolbenstange des Bremszylinders und dem standardmäßig vorgesehenen Stößel der Spreizkeileinheit bestens geeignet.

Insbesondere bevorzugt ist es, dass der Führungsabschnitt einen Anschlag aufweist, welcher die Verlagerbarkeit des Übertragungselements längs der Führungsachse in einer Richtung begrenzt. Der Anschlag des Führungsabschnitts ist vorzugsweise ein nach innen ragender Vorsprung am Führungsabschnitt, an welchem das Übertragungselement anschlägt, wenn keine Kraft vom Bremszylinder über die Kolbenstange auf das Übertragungselement übertragen wird. Insbesondere bevorzugt ist der Anschlag auf der Seite des Führungsabschnitts angeordnet, welche zum Bremszylinder hinweist. Dabei dient der Anschlag vorzugsweise dazu, bei Abnehmen des Bremszylinders zu verhindern, dass das Übertragungselement aus dem Führungsabschnitt heraus gelangt. Insbesondere bevorzugt kann der Anschlag auch als Sicherungsring ausgeführt sein, bzw. als Sprengring, welcher in einer am Führungsabschnitt vorgesehen Nut eingelassen wird. Auf diese Weise kann besonders bevorzugt der Anschlag vom Führungsabschnitt entfernt werden und das Übertragungselement aus dem Führungsabschnitt entnommen werden.

Vorzugsweise ist das Übertragungselement in Richtung der Kolbenstange vorgespannt. Die Vorspannung des Übertragungselements wird vorzugsweise durch ein Federelement, beispielsweise eine Schraubenfeder, aufgebracht, welches auf der zur Spreizkeileinheit weisenden Seite des Übertragungselements an diesem anliegt. Das Federelement stützt sich dabei bevorzugt an der Spreizkeileinheit, oder einer entsprechenden Anlagegeometrie der Trägereinheit ab und übt vorzugsweise eine Kraft auf den Stößel aus, welcher diese im zweiten Aufnahmeabschnitt auf das Übertragungselement überträgt. Als Folge der Vorspannung stützt sich das Übertragungselement entweder am Anschlag der Trägereinheit oder mit seinem ersten Aufnahmeabschnitt an der Kolbenstange ab. Vorteilhaft bei einer Vorspannung des Übertragungselements in Richtung der Kolbenstange ist, dass zum einen die Leerlaufwege der Kolbenstange minimiert werden können und somit bei Betätigen der Bremse die Kolbenstange bereits direkt am Übertragungselement anliegt. Bei der bevorzugten Ausführungsform, in der das Federelement an dem Stößel eingreift, wird mit Vorteil der Stößel aus der Spreizkeileinheit herausverlagert, wenn keine Bremskraft durch den Bremszylinder anliegt. Vorteilhafterweise sorgt das Federelement in dieser Ausführungsform für ein leichteres Lösen der Bremseinheit.

Insbesondere bevorzugt weist die Trägereinheit einen Grundkörper und ein Verspannelement auf, wobei der Führungsabschnitt innerhalb des Verspannelements angeordnet ist und wobei das Verspannelement in einer Aussparung am Grundkörper einführbar und kraft- und/oder formschlüssig am Grundkörper festlegbar ist. Der Grundkörper der Trägereinheit ist vorzugsweise der Grundkörper eines Bremsträgers, welcher eine feste Verbindung zwischen dem Bremssystem und dem Achskörper eines Nutzfahrzeuges herstellt. In eine am Grundkörper vorgesehene Aussparung kann vorzugsweise ein Verspannelement eingesetzt werden, wobei das Verspannelement besonders bevorzugt ebenfalls hohl ausgebildet ist und in seiner Aussparung den Führungsabschnitt bildet. Auf diese Weise ist es möglich, dass bei der Montage der Bremseinheit zunächst das Übertragungselement in das Verspannelement bzw. in den im Verspannelement vorgesehenen Führungsabschnitt eingesetzt wird und anschließend beide Teile an dem Grundkörper festgelegt werden. Insbesondere für den Fall, dass das Übertragungselement durch ein Rückstellelement in der von der Spreizkeileinheit wegweisenden Richtung vorgespannt sein soll, erleichtert dies die Montage, da das Verspannelement in Richtung der Spreizkeileinheit in den Grundkörper eingesetzt werden kann und anschließend die Vorspannung während des Einschraubens des Verspannelements in den Grundkörper oder während des formschlüssigen Festlegens des Verspannelements am Grundkörper eingestellt werden kann. Insbesondere bevorzugt kann am Verspannelement ein Gewinde vorgesehen sein, welches in ein am Grundkörper vorgesehenes Gewinde eingreift. Alternativ könnte beispielsweise eine Nut-Spannringanordnung am Verspannelement vorgesehen sein, wobei ein Spannring bzw. ein Federring in eine außen am Verspannelement befindliche Nut eingesetzt werden kann und sich am Grundkörper abstützt. Indem der Führungsabschnitt an einem separat ausgebildeten Verspannelement angeordnet ist, können u. a. die Oberflächenbeschichtungen oder Oberflächenbehandlungen auf einfachere Weise stattfinden, als wenn der Führungsabschnitt an dem Grundkörper der Trägereinheit vorgesehen wäre. Durch die geringere Größe des Verspannelements relativ zum Grundkörper, ist die Bearbeitung der Oberflächen, insbesondere des Führungsabschnitts, mit geringerem Aufwand möglich, als dies bei einer Oberflächenbehandlung des kompletten Grundkörpers der Fall wäre.

Insbesondere bevorzugt ist das Verspannelement von einem Hülsenelement am Grundkörper gehalten, wobei zwischen dem Verspannelement und dem Hülsenelement ein Kraft- und/oder Formschluss herstellbar ist. Das Hülsenelement kann vorzugsweise als einfache Mutter mit einem Innengewinde ausgebildet sein, welche an einem Außengewinde des Verspannelements, das vorzugsweise durch die Aussparung des Grundkörpers der Trägereinheit hindurch gesteckt ist und auf der gegenüberliegenden Seite herausragt, aufschraubbar ist, um auf diese Weise das Verspannelement am Grundkörper festzulegen. Diese Ausführungsform erleichtert die Herstellung der Bremseinheit, da ein Gewinde nicht mehr in den Grundkörper der Trägereinheit eingeschnitten werden muss und dieser als einfaches Gussteil ausgebildet werden kann, welches kaum Nacharbeitungsarbeiten benötigt.

Darüber hinaus bevorzugt kann das Hülsenelement eine Bohrung aufweisen, die zumindest abschnittsweise den Führungsabschnitt bildet. Die Verwendung eines Verspannelements und eines Hülsenelements hat insbesondere den Vorteil, dass für diese beiden Elemente härtere Materialen verwendet werden können, als für den gesamten Grundkörper der Trägereinheit. So kann dieser beispielsweise aus einem einfachen Grauguss hergestellt sein, während für das Verspannelement und das Hülsenelement hochfeste Materialien wie Sphäroguss oder geschmiedete Stahlteile verwendet werden können, welche eine höhere Oberflächenqualität und Korrosionsbeständigkeit bzw. Reibungsbeständigkeit aufweisen. Hierdurch sinken die Materialkosten deutlich, da nicht die gesamte Trägereinheit aus hochfesten und teuren Werkstoffen ausgebildet sein muss. Die Verwendung eines Verspannelements und eines Hülsenelements und deren Verschraubung miteinander von zwei Seiten der Aussparung des Grundkörpers aus, erleichtert dabei insbesondere die Montage der Bremseinheit. Insbesondere bevorzugt ist es, dass das Hülsenelement einstückig mit der Spreizkeileinheit ausgeführt ist, wobei sich die Spreizkeileinheit bei einer quer zur Führungsrichtung stehenden Fläche an dem Grundkörper abstützt. Eine weitere Vereinfachung der Montage der Bremseinheit kann dadurch erreicht werden, dass das Hülsenelement einstückig an der Spreizkeileinheit ausgeführt ist, wobei die Spreizkeileinheit in einfacher Weise am Grundkörper der Trägereinheit positioniert wird und anschließend über das Verspannelement gegen den Grundkörper gezwungen bzw. auf diese Weise an diesem festgelegt wird. Sofern in diesem Fall der Führungsabschnitt im Hülsenelement angeordnet ist, kann das Übertragungselement im Hülsenelement, welches einstückig mit der Spreizkeileinheit ausgeführt ist, angeordnet werden und anschließend die Einheit aus Spreizkeileinheit und Hülsenelement an dem Grundkörper über das Verspannelement festgelegt werden. Darüber hinaus kann vorzugsweise der am Verspannelement vorgesehene Teil des Führungsabschnitts den Anschlag aufweisen, welcher verhindert, dass das Übertragungselement an dem an dem Hülsenelement vorgesehenen Führungsabschnitt herausgelangt.

Es versteht sich, dass die Merkmale der Trägereinheit und des Übertragungselements, welche sich auf die entsprechend korrespondierende Geometrien der Spreizkeileinheit und des Bremszylinders beziehen, nicht zwangsläufig beinhalten, dass das Vorhandensein eines Bremszylinders und einer Spreizkeileinheit für die vorliegende Erfindung erforderlich ist. Lediglich müssen die korrespondierenden Geometrien, d. h. insbesondere die Aufnahmeabschnitte am Übertragungselement oder die entsprechende Anordnung des Verspannelements und des Hülsenelements, derart ausgeführt sein, dass sie in vorteilhafter Weise mit diesen angrenzenden Systemen in Funktion treten können. Wichtige Aufgabe der vorliegenden Erfindung ist es dabei auch, eine Montage einer Bremseinheit zu vereinfachen, wobei die einzelnen Komponenten der Erfindung auch im demontierten Zustand vorliegen können, in welchem eine tatsächliche Kraftübertragung bzw. ein tatsächlicher Funktionszusammenhang zwischen den einzelnen Bauteilen verständlicherweise noch nicht gegeben ist.

Weitere Vorteile und Merkmale der Erfindung ergeben sich aus der nachfolgenden Beschreibung mit Bezug auf die beigefügten Figuren. Es versteht sich, dass einzelne in einzelnen Figuren gezeigte Merkmale auch in Ausführungsformen anderer Figuren angewendet werden können und nicht auf die jeweilige Merkmalskombination beschränkt sind. Es zeigen:
- Fig. 1:: eine Schnittansicht einer ersten bevorzugten Ausführungsform der erfindungsgemäßen Bremseinheit,
- Fig. 2a - 2d:: Ansichten verschiedener Ausführungsformen eines erfindungsgemäßen Übertragungselements,
- Fig. 3:: eine vereinfachte, schematische Schnittansicht einer bevorzugten Ausführungsform der erfindungsgemäßen Bremseinheit,
- Fig. 4:: eine weitere Schnittansicht einer bevorzugten Ausführungsform der erfindungsgemäßen Bremseinheit,
- Fig. 5:: eine weitere Schnittansicht einer bevorzugten Ausführungsform der erfindungsgemäßen Bremseinheit, und
- Fig. 6:: eine weitere Schnittansicht einer bevorzugten Ausführungsform der erfindungsgemäßen Bremseinheit.

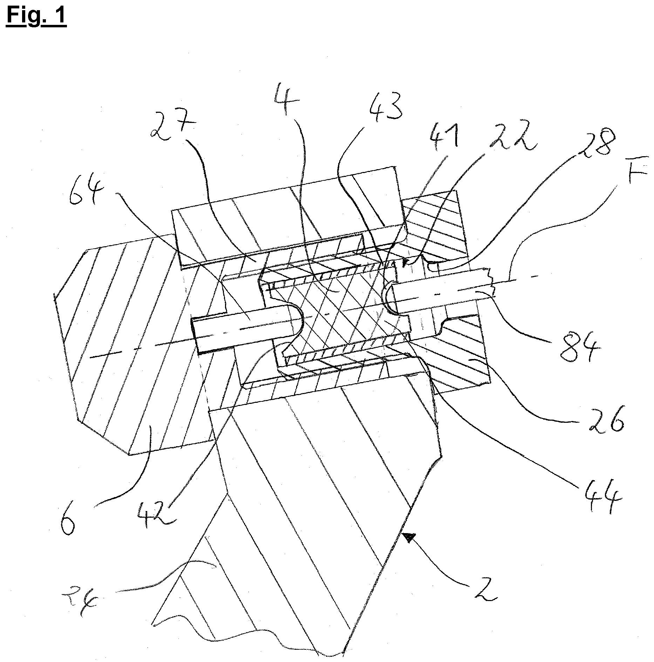

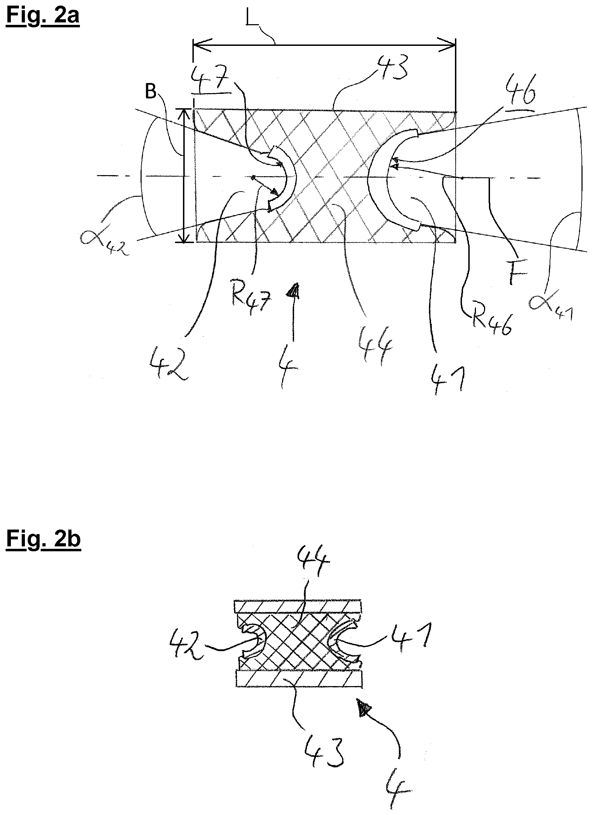

Bei der in Fig. 1 gezeigten, bevorzugten Ausführungsform, weist die Trägereinheit 2 einen Grundkörper 24 auf, in dessen Aussparung ein Hülsenelement 27, sowie ein Verspannelement 26 angeordnet sind. Das Verspannelement 26 ist dabei vorzugsweise als hohlkörperförmige Schraube ausgebildet, welche ein Außengewinde aufweist und mit einem entsprechenden Innengewinde des Hülsenelements 27 in Eingriff bringbar ist. Dabei stützt sich das Verspannelement 26 vorzugsweise an eine quer, bzw. vorzugsweise senkrecht zur Führungsachse F stehende Fläche des Grundkörpers 24 der Trägereinheit 2 ab. Ebenso bevorzugt stützt sich die mit dem Hülsenelement 27 einstückig ausgeführte Spreizkeileinheit 6 an einer entsprechenden quer- bzw. vorzugsweise senkrecht zur Führungsachse F stehenden Fläche des Grundkörpers 24 ab. Es versteht sich, dass das Verspannelement 26 vorzugsweise entsprechende Eingriffsgeometrien, wie einen Außensechskant oder einen Innensechskant, aufweist, um ein Drehmoment an dem Verspannelement aufbringen zu können, um dieses gegen das Hülsenelement 27 verspannen zu können. In der am Verspannelement 26 vorgesehenen Aussparung, ist der Führungsabschnitt 22 angeordnet, in welchen das Übertragungselement 4 längs der Führungsachse F verlagerbar gesichert ist. Dabei verhindert der Führungsabschnitt 22 eine Verlagerung des Übertragungselements quer zur Führungsachse F. Weiterhin bevorzugt weist der Führungsabschnitt 22 an einem seiner Enden einen Anschlag 28 auf, wobei der in der Figur gezeigte Anschlag 28 vorzugsweise verhindert, dass das Übertragungselement 4 nach rechts in der Figur aus dem Führungsabschnitt 22 herausgelangen kann. Der Anschlag kann auch Teil eines Dichtelements sein, das den Führungsabschnitt 22 zur Umgebung abdichtet und so ein Eindringen von Schmutz etc. verhindert. Von rechts in der Figur aus gesehen, greift am Übertragungselement 4 eine Kolbenstange 84 eines Bremszylinders (in der Figur nicht gezeigt) ein, welche eine Kraft auf das Übertragungselement 4 ausübt, um dieses nach links zu verschieben. An der linken Seite des Übertragungselements 4 greift der Stößel 64 einer Spreizkeileinheit 6 an, wobei das Übertragungselement 4, angetrieben durch die Kolbenstange 84, den Stößel 64 mit einer Kraft beaufschlagt und diesen nach links in der Figur zwingt. Weitere Details der Spreizkeileinheit 6 werden als dem Fachmann bekannt vorausgesetzt und sollen an dieser Stelle nicht näher erläutert werden. Der Führungsabschnitt 22 sowie das Übertragungselement 4 sind insbesondere bevorzugt rotationssymmetrisch um die Führungsachse F ausgebildet. Alternativ bevorzugt könnte auch ein Rechteck- oder ein anderweitig polygonaler Querschnitt vorgesehen sein. An seiner zum Führungsabschnitt 22 hinweisenden Außenfläche, weist das Übertragungselement 4 einen Gleitabschnitt 43 auf, welcher insbesondere aus einem Material gebildet ist das eine gute Reibpaarung mit dem Material des Führungsabschnitts 22 bildet, um möglichst bei geringer Reibung an diesem entlang gleiten zu können. An seiner zur Kolbenstange 84 hinweisenden Seite weist das Übertragungselement 4 einen ersten Aufnahmeabschnitt 41 auf, welcher vorzugsweise gerundet ausgeführt ist und möglichst passgenau mit der Kontaktgeometrie, d. h. der Geometrie auf der linken Seite der Kolbenstange 84, in Eingriff bringbar ist. An der zum Stößel 64 hinweisenden Seite, weist das Übertragungselement 4 vorzugsweise einen zweiten Aufnahmeabschnitt 42 auf, welcher - wie in der Figur gezeigt - vorzugsweise trichterförmig ausgebildet ist und im Kontaktbereich mit dem Stößel 64 eine gerundete Fläche aufweist. Bei der in Figur dargestellten Ausführungsform ist der erste Krümmungsradius R₄₁ des ersten Aufnahmeabschnitts 41 in etwa gleich zu einem zweiten Krümmungsradius R₄₂ des zweiten Aufnahmeabschnitts 42 (siehe hierzu auch Fig. 2a). Das Verhältnis des ersten zum zweiten Krümmungsradius nimmt daher ein bevorzugtes Verhältnis von ca. 0,9 - 1,1 an. Weiterhin bevorzugt ist der zweite Aufnahmeabschnitt 42 trichterförmig ausgeführt, um insbesondere bei einer Schrägstellung des Stößels 64 einen gewissen Spielraum zu gewährleisten und zu verhindern, dass der Stößel 64 ein Drehmoment auf das Übertragungselement 4 überträgt.

Fig. 2a zeigt eine Schnittansicht einer bevorzugten Ausführungsform des erfindungsgemäßen Übertragungselements 4. Dabei ist zu erkennen, dass vorzugsweise der erste Aufnahmeabschnitt 41 und der zweite Aufnahmeabschnitt 42 trichterförmig ausgebildet sind, wobei der erste Aufnahmeabschnitt 41 einen Öffnungswinkel von α₄₁ aufweist und der zweite Aufnahmeabschnitt 42 einen Öffnungswinkel von α₄₂ aufweist. Weiterhin ist gezeigt, dass das Übertragungselement 4 im Wesentlichen aus einem steifen Material 44 gebildet ist, welches eine möglichst gute Kraftübertragung vom ersten Aufnahmeabschnitt 41 zum zweiten Aufnahmeabschnitt 42 ermöglicht. Weiterhin bevorzugt ist das Übertragungselement 4 im Bereich der ersten Aufnahmefläche 46 mit einer Materialverstärkung ausgestattet, wobei die Materialverstärkung wie gezeigt vorzugsweise als Halbkugel bzw. halbkreisförmige Einlage ausgelegt sein kann. Analog hierzu weist vorzugsweise der zweite Aufnahmeabschnitt 42 ebenfalls eine Verstärkung seiner zweiten Aufnahmefläche 47 auf, welche wie gezeigt durch eine metallische Einlage oder alternativ bevorzugt auch durch eine entsprechende verschleißmindernde Beschichtung ausgebildet sein kann. Die erste Aufnahmefläche 46 weist vorzugsweise einen mittleren Krümmungsradius R₄₆ auf, welcher insbesondere bevorzugt größer ist, als der zweite mittlere Krümmungsradius R₄₇ der zweiten Aufnahmefläche 47. Bevorzugt weist das Übertragungselement 4 eine Länge L längs der Führungsachse F auf, die größer ist als die Breite B des Übertragungselements quer zur Führungsachse F. An seiner Außenfläche weist das Übertragungselement 4 vorzugsweise einen Gleitabschnitt 43 auf, der besonders bevorzugt mit einer geringen Spielpassung gleitend im Führungsabschnitt 22 der Trägereinheit 2 anordenbar ist.

Fig. 2b zeigt eine weitere bevorzugte Ausführungsform des erfindungsgemäßen Übertragungselements 4, wobei im Unterschied zu der in Fig. 2a gezeigten Ausführungsform der erste Aufnahmeabschnitt 41 und der zweite Aufnahmeabschnitt 42 nicht trichterförmig, sondern lediglich gerundet ausgebildet sind und wobei der Gleitabschnitt 43 ein vorzugsweise separat ausgebildetes Teil ist, welches dann beispielsweise mittels eines Stoffschlusses an dem steifen Material 44 des Übertragungselements 4 festlegbar ist. Hierfür kommen beispielsweise Kleb- oder Aufdampfverfahren in Frage.

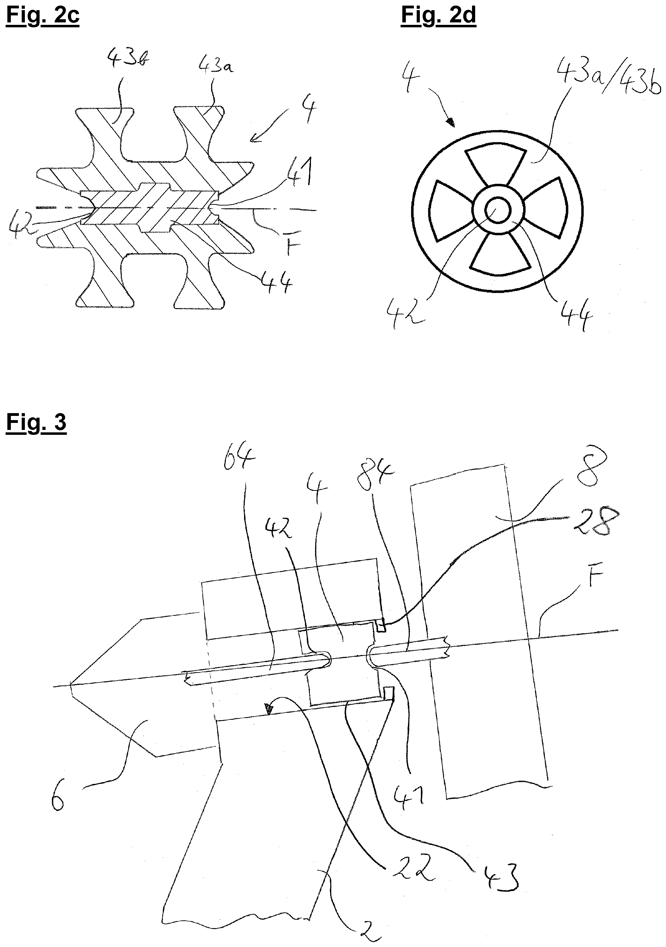

Fig. 2c zeigt eine weitere bevorzugte Ausführungsform des erfindungsgemäßen Übertragungselements, wobei der Gleitabschnitt 43 vorzugsweise aus zwei zylinderförmigen Abschnitten 43a und 43b ausgebildet ist. Weiterhin bevorzugt ist das steife Material 44 des Übertragungselements 4 als bevorzugt zylinderförmige Einlage zwischen dem ersten Aufnahmeabschnitt 41 und dem zweiten Aufnahmeabschnitt 42 angeordnet und dient so einer unmittelbaren, möglichst wenig gefedert oder gedämpften Kraftübertragung zwischen der Kolbenstange 84 und dem Stößel 64.

Fig. 2d zeigt eine Ansicht des in Fig. 2c gezeigten Übertragungselements 4 längs der Führungsachse F, wobei dargestellt ist, dass der zweite Zylinderabschnitt 43b vorzugsweise speichenförmige Geometrien aufweist, welche eine weitere Gewichtsreduzierung erlauben.

In Fig. 3 ist eine weitere Ausführungsform der erfindungsgemäßen Bremseinheit dargestellt, bei der der Führungsabschnitt 22 unmittelbar in der Trägereinheit 2 bzw. unmittelbar im Grundkörper 24 der Trägereinheit 2 angeordnet ist. Mit anderen Worten weist die Trägereinheit 2 in diesem Fall kein Verspannelement 26 und kein Hülsenelement 27 auf. Dabei werden die Spreizkeileinheit 6 und der Bremszylinder 8 in aus dem Stand der Technik bekannter Weise über Flansche und Schraubverbindungen an der Trägereinheit 2 festgelegt. Es versteht sich, dass bei einer derartig ausgeführten Trägereinheit 2 die Anzahl der zu montierenden Bauteile möglichst gering ist, wodurch der Montageaufwand reduziert werden kann, da wenige einzelne Bauteile zu montieren sind.

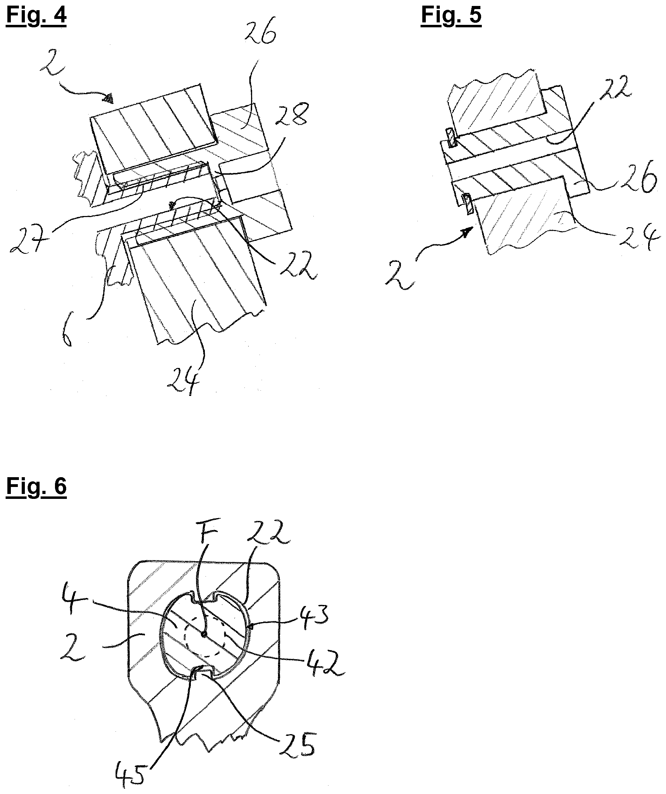

Fig. 4 zeigt eine weitere bevorzugte Ausführungsform der erfindungsgemäßen Trägereinheit 2, wobei die Trägereinheit einen Grundkörper 24 aufweist, in den ein Verspannelement 26 eingesetzt ist, wobei das Verspannelement vorzugsweise hohlkörperförmig ausgebildet ist und an seiner Innenseite ein Innengewinde aufweist, in welchem wiederum ein Hülsenelement 27 eingreift. Das Hülsenelement 27 ist bevorzugt einstückig mit der Spreizkeileinheit 6 ausgeführt und weist an seiner Innenseite eine Aussparung auf, welche besonders bevorzugt der Führungsabschnitt 22 der Trägereinheit 2 ist. Vorteilhaft bei dieser Ausführungsform ist, dass durch die einstückige Ausbildung von Hülsenelement 27 und Spreizkeileinheit 6 eine geringe Anzahl zu montierender Teile erforderlich ist, wobei auch der Vorteil, den Führungsabschnitt 22 nicht im Grundkörper 24 der Trägereinheit 2 anzuordnen und eine leichtere Bearbeitbarkeit der Oberflächen erreicht werden kann.

Fig. 5 zeigt eine weitere Ausführungsform der erfindungsgemäßen Trägereinheit 2, wobei das Verspannelement 26 vorzugsweise mittels einer Nut-Federverbindung formschlüssig am Grundkörper 24 der Trägereinheit 2 festgelegt ist. Weiterhin weist das Verspannelement 26 eine Aussparung auf, welche den Führungsabschnitt 22 der Trägereinheit bildet.

Fig. 6 zeigt eine Schnittansicht einer bevorzugten Ausführungsform der erfindungsgemäßen Bremseinheit, wobei die Trägereinheit 2 und das Übertragungselement 4 vorzugsweise je einen Vor- oder Rücksprung 25, 45 aufweisen, welcher mit dem jeweils korrespondierenden Rück- oder Vorsprung 45, 25 in Eingriff bringbar ist, um eine Verdrehsicherung des Übertragungselements 4 in der Trägereinheit zu gewährleisten. Die Vorsprünge können dabei als durchgehende Schiene oder als einzelne Nasen ausgebildet sein, während die Rücksprünge als Nuten mit vorzugsweise der Länge des Bewegungsspielraumes des Übertragungselements 4 ausgebildet sind. Mit Vorteil kann auf diese Weise eine bevorzugte Einbaulage des Übertragungselements 4 relativ zur Trägereinheit 2 festgelegt werden, um beispielsweise Festigkeiten des Übertragungselements 4 auf bestimmte Belastungsrichtungen hin anpassen zu können.

Es versteht sich, dass im Rahmen der vorliegenden Erfindung einzelne, möglicherweise in nur einer der Figuren gezeigte Merkmale auch in weiteren Ausführungsformen zum Einsatz gelangen können, sofern die nicht explizit oder aufgrund technischer Überlegungen ausgeschlossen sind.

**Bezugszeichen:**

| | | | |
|---|---|---|---|
| 2 | - Trägereinheit | 44 | - steifes Material |
| 4 | - Übertragungselement | 45 | - Vor- oder Rücksprung |
| 6 | - Spreizkeileinheit | 46 | - Aufnahmefläche |
| 8 | - Bremszylinder | 47 | - Aufnahmefläche |
| 22 | - Führungsabschnitt | 64 | - Stößel |
| 24 | - Grundkörper | 84 | - Kolbenstange |
| 25 | - Vor- oder Rücksprung | α₄₁ | - Öffnungswinkel |
| 26 | - Verspannelement | α₄₂ | - Öffnungswinkel |
| 27 | - Hülsenelement | B | - Breite |
| 28 | - Anschlag | F | - Führungsachse |
| 41 | - erster Aufnahmeabschnitt | L | - Länge |
| 42 | - zweiter Aufnahmeabschnitt | R₄₆ | - Radius |
| 43 | - Gleitabschnitt | R₄₇ | - Radius |

## Patentansprüche

1. Bremseinheit für Nutzfahrzeuge, umfassend
eine Trägereinheit (2) und ein Übertragungselement (4),
wobei die Trägereinheit (2) einen Führungsabschnitt (22) aufweist, in welchem das Übertragungselement (4) entlang einer Führungsachse (F) verlagerbar angeordnet ist,
wobei das Übertragungselement (4) einen ersten Aufnahmeabschnitt (41), der mit einer Kolbenstange (84) eines Bremszylinders (8) in Eingriff bringbar ist, und einen zweiten Aufnahmeabschnitt (42), der mit einem Stößel (64) einer Spreizkeileinheit (6) in Eingriff bringbar ist, aufweist,
wobei das Übertragungselement (4) ausgelegt ist, Kräfte und Verlagerungen entlang der Führungsachse (F) zwischen der Kolbenstange (84) und dem Stößel (64) zu übertragen,
**dadurch gekennzeichnet, dass**
die Trägereinheit (2) einen Grundkörper (24) und ein Verspannelement (26) aufweist,
wobei der Führungsabschnitt (22) innerhalb des Verspannelements (26) angeordnet ist, und
wobei das Verspannelement (26) in eine Aussparung am Grundkörper (24) einführbar und kraft- und/oder formschlüssig am Grundkörper (24) festlegbar ist.

2. Bremseinheit nach Anspruch 1,
wobei der erste Aufnahmeabschnitt (41) und der zweite Aufnahmeabschnitt (42) an zwei gegenüberliegenden Seiten des Übertragungselements (4) angeordnet und im Wesentlichen koaxial zueinander ausgerichtet sind.

3. Bremseinheit nach einem der vorhergehenden Ansprüche,
wobei das Übertragungselement (4) im ersten Aufnahmeabschnitt (41) und/oder im zweiten Aufnahmeabschnitt (42) ein verschleißminderndes Material aufweist.

4. Bremseinheit nach einem der vorhergehenden Ansprüche,
wobei das Übertragungselement (4) einen Gleitabschnitt (43) aufweist, der ausgelegt ist, mit vorzugsweise geringem Spiel am Führungsabschnitt (22) zu gleiten,
wobei der Gleitabschnitt (43) vorzugsweise ein verschleißminderndes Material aufweist.

5. Bremseinheit nach Anspruch 4,
wobei der Gleitabschnitt (43) zwei Zylinderabschnitte (43a, 43b) aufweist, an deren Mantelflächen das Übertragungselement (4) im Führungsabschnitt (22) geführt ist,
wobei die Zylinderabschnitte (43a, 43b) längs der Führungsachse (F) von einander beabstandet und durch einen Zwischenraum getrennt sind.

6. Bremseinheit nach Anspruch 4 oder 5,
wobei der Gleitabschnitt (43) einen Vor- oder Rücksprung (45) aufweist, der mit einem korrespondierenden Rück- oder Vorsprung (25) des Führungsabschnitts (22) in Eingriff bringbar ist, um das Übertragungselement (4) gegen Verdrehung um die Führungsachse (F) relativ zur Trägereinheit (2) zu sichern.

7. Bremseinheit nach einem der vorhergehenden Ansprüche,
wobei das Übertragungselement (4) eine maximale Länge (L) längs der Führungsachse (F) und eine maximale Breite (B) quer zur Führungsachse (B) aufweist,
wobei das Verhältnis der Breite (B) zur Länge (L) im Bereich von 0,5 - 2, vorzugsweise 0,8 - 1,6 und besonders bevorzugt bei ca. 1,2 - 1,4 liegt.

8. Bremseinheit nach einem der vorhergehenden Ansprüche,
wobei der erste Aufnahmeabschnitt (41) und/oder der zweite Aufnahmeabschnitt (42) einen Rücksprung bzw. eine trichterförmige Aussparung aufweist, in welche(m) die jeweils korrespondierende Kolbenstange (84) bzw. der Stößel (64) einführbar ist.

9. Bremseinheit nach Anspruch 8,
wobei der Rücksprung bzw. die trichterförmige Aussparung des ersten und/oder des zweiten Aufnahmeabschnitts (41, 42) einen Öffnungswinkel (α) aufweist,
wobei der Öffnungswinkel (α) Werte von 5° - 45°, bevorzugt von 15° - 30° und insbesondere bevorzugt von ca. 23° - 25° aufweist.

10. Bremseinheit nach einem der vorhergehenden Ansprüche,
wobei der erste und/oder der zweite Aufnahmeabschnitt (41, 42) eine Aufnahmefläche (46, 47) aufweist,
wobei die erste Aufnahmefläche (46) einen ersten mittleren Krümmungsradius (R₄₆) aufweist,
wobei die zweite Aufnahmefläche (47) einen zweiten mittleren Krümmungsradius (R₄₇) aufweist, und
wobei der erste Krümmungsradius (R₄₆) vorzugsweise größer ist als der zweite Krümmungsradius (R₄₇).

11. Bremseinheit nach Anspruch 10,
wobei der erste Krümmungsradius (R₄₆) zum zweiten Krümmungsradius (R₄₇) in einem Verhältnis von 1 - 3, vorzugsweise 1,2 - 2 und besonders bevorzugt von ca. 1,5 - 1,6 steht.

12. Bremseinheit nach einem der vorhergehenden Ansprüche,
wobei das Übertragungselement (4) in Richtung der Kolbenstange (84) vorgespannt ist.

13. Bremseinheit nach einem der vorhergehenden Ansprüche,
wobei das Verspannelement (26) von einem Hülsenelement (27) am Grundkörper (24) gehalten ist,
wobei zwischen dem Spannelement (26) und Hülsenelement (27) ein Kraft- und/oder Formschluss herstellbar ist.

14. Bremseinheit nach Anspruch 13,
wobei das Hülsenelement (27) einstückig mit der Spreizkeileinheit (6) ausgeführt ist, und
wobei sich die Spreizkeileinheit (6) an einer quer zur Führungsachse (F) stehenden Fläche an dem Grundkörper (24) abstützt.

## Claims

1. Brake unit for commercial vehicles, comprising
a carrier unit (2) and a transmission element (4),
the carrier unit (2) having a guide section (22), in which the transmission element (4) is arranged such that it can be moved along a guide axis (F),
the transmission element (4) having a first receiving section (41) which can be brought into engagement with a piston rod (84) of a brake cylinder (8), and a second receiving section (42) which can be brought into engagement with a push rod (64) of an expansion wedge unit (6),
the transmission element (4) being designed to transmit forces and movements along the guide axis (F) between the piston rod (84) and the push rod (64),
**characterized in that**
the carrier unit (2) has a main body (24) and a bracing element (26),
the guide section (22) being arranged within the bracing element (26), and
it being possible for the bracing element (26) to be introduced into a cut-out on the main body (24) and to be fixed on the main body (24) in a force-fitting and/or positively locking manner.

2. Brake unit according to Claim 1,
the first receiving section (41) and the second receiving section (42) being arranged on two opposite sides of the transmission element (4) and being oriented substantially coaxially with respect to one another.

3. Brake unit according to either of the preceding claims,
the transmission element (4) having a wear-reducing material in the first receiving section (41) and/or in the second receiving section (42).

4. Brake unit according to one of the preceding claims,
the transmission element (4) having a sliding section (43) which is designed to slide on the guide section (22) with preferably low play,
the sliding section (43) preferably having a wear-reducing material.

5. Brake unit according to Claim 4,
the sliding section (43) having two cylinder sections (43a, 43b), on the circumferential surfaces of which the transmission element (4) is guided in the guide section (22),
the cylinder sections (43a, 43b) being spaced apart from one another along the guide axis (F) and being separated by way of an intermediate space.

6. Brake unit according to Claim 4 or 5,
the sliding section (43) having a projection or recess (45) which can be brought into engagement with a corresponding recess or projection (25) of the guide section (22), in order to secure the transmission element (4) against rotation about the guide axis (F) relative to the carrier unit (2).

7. Brake unit according to one of the preceding claims,
the transmission element (4) having a maximum length (L) along the guide axis (F) and a maximum width (B) transversely with respect to the guide axis (F),
the ratio of the width (B) to the length (L) lying in the range of 0.5-2, preferably 0.8-1.6 and particularly preferably at approximately 1.2-1.4.

8. Brake unit according to one of the preceding claims,
the first receiving section (41) and/or the second receiving section (42) having a recess and a funnel-shaped cut-out, into which the respectively corresponding piston rod (84) and the push rod (64), respectively, can be introduced.

9. Brake unit according to Claim 8,
the recess and the funnel-shaped cut-out of the first and/or the second receiving section (41, 42) having an opening angle (α),
the opening angle (α) having values of 5°-45°, preferably of 15°-30° and, in particular, preferably of approximately 23°-25°.

10. Brake unit according to one of the preceding claims,
the first and/or the second receiving section (41, 42) having a receiving face (46, 47),
the first receiving face (46) having a first mean curvature radius (R₄₆),
the second receiving face (47) having a second mean curvature radius (R₄₇), and
the first curvature radius (R₄₆) preferably being greater than the second curvature radius (R₄₇).

11. Brake unit according to Claim 10,
the first curvature radius (R₄₆) being in a ratio to the second curvature radius (R₄₇) of 1-3, preferably 1.2-2 and particularly preferably of approximately 1.5-1.6.

12. Brake unit according to one of the preceding claims,
the transmission element (4) being prestressed in the direction of the piston rod (84).

13. Brake unit according to one of the preceding claims,
the bracing element (26) being held on the main body (24) by a sleeve element (27),
it being possible for a non-positively and/or positively locking connection to be established between the clamping element (26) and the sleeve element (27).

14. Brake unit according to Claim 13,
the sleeve element (27) being configured in one piece with the expansion wedge unit (6), and
the expansion wedge unit (6) being supported on the main body (24) on a surface which lies transversely with respect to the guide axis (F).

## Revendications

1. Unité de freinage pour véhicules utilitaires, comportant
une unité de support (2) et un élément de transmission (4),
dans laquelle
l'unité de support (2) présente une portion de guidage (22) dans laquelle l'élément de transmission (4) est agencé de façon mobile le long d'un axe de guidage (F),
l'élément de transmission (4) présente une première portion de réception (41) qui est susceptible d'être mise en engagement avec une tige de piston (84) d'un cylindre de frein (8), et une seconde portion de réception (42) qui est susceptible d'être mise en engagement avec un poussoir (64) d'une unité à coin d'écartement (6),
l'élément de transmission (4) est conçu pour transmettre des forces et des mouvements le long de l'axe de guidage (F) entre la tige de piston (84) et le poussoir (64),
**caractérisée en ce que**
l'unité de support (2) comprend un corps de base (24) et un élément de serrage (26),
la portion de guidage (22) est agencée à l'intérieur de l'élément de serrage (26), et
l'élément de serrage (26) est susceptible d'être introduit dans une échancrure sur le corps de base (24) et d'être immobilisé en coopération de forces et/ou de formes sur le corps de base (24).

2. Unité de freinage selon la revendication 1,
dans laquelle
la première portion de réception (41) et la seconde portion de réception (42) sont agencées sur deux côtés opposés de l'élément de transmission (4) et sont orientées sensiblement coaxialement l'une par rapport à l'autre.

3. Unité de freinage selon l'une des revendications précédentes,
dans laquelle l'élément de transmission (4) dans la première portion de réception (41) et/ou dans la seconde portion de réception (42) présente un matériau réduisant l'usure.

4. Unité de freinage selon l'une des revendications précédentes,
dans laquelle l'élément de transmission (4) comprend une portion de coulissement (43) qui est conçu pour coulisser avec un jeu de préférence faible sur la portion de guidage (22),
la portion de coulissement (43) présentant de préférence un matériau réduisant l'usure.

5. Unité de freinage selon la revendication 4,
dans laquelle la portion de coulissement (43) comprend deux portions cylindriques (43a, 43b) sur les surfaces enveloppes desquelles est guidé l'élément de transmission (4) dans la portion de guidage (22),
les portions cylindriques (43a, 43b) étant espacées l'une de l'autre le long de l'axe de guidage (F) et étant séparées par un intervalle.

6. Unité de freinage selon la revendication 4 ou 5,
dans laquelle la portion de coulissement (43) comprend un ergot ou un retrait (45) qui est susceptible d'être mis en engagement avec un retrait ou un ergot (25) correspondant de la portion de guidage (22), afin de bloquer l'élément de transmission (4) à l'encontre d'une rotation autour de l'axe de guidage (F) par rapport à l'unité de support (2).

7. Unité de freinage selon l'une des revendications précédentes,
dans laquelle l'élément de transmission (4) présente une longueur maximale (L) le long de l'axe de guidage (F) et une largeur maximale (B) transversalement à l'axe de guidage (B),
le rapport de la largeur (B) sur la longueur (L) étant dans la plage de 0,5 à 2, de préférence de 0,8 à 1,6 et de manière particulièrement préférée d'environ 1,2 à 1,4.

8. Unité de freinage selon l'une des revendications précédentes,
dans laquelle la première portion de réception (41) et/ou la seconde portion de réception (42) comprend un retrait ou un évidement en forme d'entonnoir dans lequel peut venir s'insérer la tige de piston correspondante (84) ou le poussoir (64).

9. Unité de freinage selon la revendication 8,
dans laquelle le retrait ou l'évidement en forme d'entonnoir de la première et/ou de la seconde portion de réception (41, 42) présente un angle d'ouverture (α),
l'angle d'ouverture (α) présentant des valeurs de 5° à 45°, de préférence de 15° à 30° et de manière particulièrement préférée d'environ 23° à 25°.

10. Unité de freinage selon l'une des revendications précédentes,
dans laquelle la première et/ou de la seconde portion de réception (41, 42) présente une surface de réception (46, 47),
la première surface de réception (46) présente un premier rayon de courbure moyen (R₄₆),
la seconde surface de réception (47) présente un second rayon de courbure moyen (R₄₇), et
le premier rayon de courbure (R₄₆) est de préférence plus grand que le second rayon de courbure (R₄₇).

11. Unité de freinage selon la revendication 10,
dans laquelle le premier rayon de courbure (R₄₆) présente par rapport au second rayon de courbure (R₄₇) un rapport de 1 à 3, de préférence de 1,2 à 2 et de manière particulièrement préférée d'environ 1,5 à 1,6.

12. Unité de freinage selon l'une des revendications précédentes,
dans laquelle l'élément de transmission (4) est précontraint en direction de la tige de piston (84).

13. Unité de freinage selon l'une des revendications précédentes,
dans laquelle l'élément de serrage (26) est retenu sur le corps de base (24) par un élément formant douille (27),
une coopération de forces et/ou de formes pouvant être établie entre l'élément de serrage (26) et l'élément formant douille (27).

14. Unité de freinage selon la revendication 13,
dans laquelle l'élément formant douille (27) est réalisé d'un seul tenant avec l'unité à coin d'écartement (6), et
l'unité à coin d'écartement (6) s'appuie sur le corps de base (24) sur une surface dressée transversalement à l'axe de guidage (F).
